# EUROPEAN PATENT SPECIFICATION

(11) **EP 3 237 800 B1**
(45) Date of publication and mention of the grant of the patent: **19.06.2019**
(21) Application number: 15828833.2
(22) Date of filing: 22.12.2015
(51) Int. Cl.: F21V 25/12, F21K 9/61, F21V 31/00, G02B 6/00, F21V 8/00, F21Y 105/10, F21Y 115/10

(54) **LIGHT PANEL**
LEUCHTPANEL
PANNEAU LUMINEUX

(30) Priority: 22.12.2014 GB 201422961
(43) Date of publication of application: 01.11.2017
(73) Proprietor: Evans Turner (Finishes) Ltd., Crayford, Kent DA1 4AL (GB); Waite, Carole, Craven Arms, Shropshire SY7 9QN (GB)
(72) Inventor: WAITE, Carole, Craven Arms Shropshire SY7 9QN (GB); MCENTIRE, Paul, Crayford Kent DA1 4AL (GB)
(74) Representative: Hopley, Joanne Selina
(86) International application number: PCT/GB2015/054132
(87) International publication number: WO 2016/102961

(56) References cited:
- EP-A1- 1 780 584
- US-A1- 2008 128 928
- US-A1- 2009 116 241
- US-A1- 2010 165 603
- US-A1- 2010 245 109
- US-A1- 2010 245 717
- US-A1- 2011 149 554
- US-A1- 2013 279 201
- US-A1- 2014 313 775

## Description

### TECHNICAL FIELD

The invention relates to a light panel particularly for use in an underground train, or subway, station, shopping mall, shopping centre, or other such enclosed environment.

### BACKGROUND

Enclosed environments, such as an underground train stations, include various lighting features. Those lighting features include overhead lighting for visibility purposes and also wall or escalator based light panels. Such light panels can be used for visibility purposes or also to back light advertising media.

Known light panels include a 2-D array of light emitting diodes (LEDs) arranged behind a screen such that the screen is back lit by the array of LEDs. The LEDs are powered by an external power source or a battery internal to the light panel. The screen layer is typically made from an opaque material to provide light diffusing properties in order to reduce the spot lighting effects of each LED. The diffusive properties of the screen are governed by the opacity thereof. A relatively highly opaque screen would reduce the hot spots of each of the LEDs in the array. However, in order for light from the entire array to penetrate the opaque screen, a very high power demand is placed on the power source. Accordingly, such light panels are not energy efficient. Decreasing the opacity of the screen could reduce energy consumption but would result in undesirable aesthetic effects, such as said hot spots associated with each individual LED being visible to passers-by.

US Publication No. US 2013/279201 in the name of INVENTIO AG relates to an illuminable transparent panel for an escalator, a moving walkway or an elevator cage.

US 2010/0245109 discloses an environmentally resistant light system with fire and flame retardancy.

It is an object of the present invention to further improve on the prior art.

### SUMMARY OF THE INVENTION

According to an aspect of the present invention there is provided a fire-rated light panel for use in an enclosed environment, the panel comprising; a light source; a wave guide in visible communication with the light source to propagate light across the light panel, the wave guide being made from an acrylic material; and a capsule encasing the light source and the wave guide, the capsule being configured to prevent fire propagation, wherein the capsule has a metallic base, a screen arranged to be backlit by the wave guide in-use, and an intumescent sealant to connect the screen and the wave guide to a metallic base, the screen comprising toughened glass, and wherein the capsule is hermetically sealed around the wave guide to prevent the release of toxic gases which are derived from the acrylic material from the light panel.

The screen being back lit indirectly by the wave guide, as opposed to being lit directly by the light source itself, reduces undesirable aesthetic effects such as hot spots associated with a 2-D LED array according to the prior art. This is mainly due to the fact that the wave guide exhibits substantially constant illuminating properties due to being made from an acrylic material. Accordingly, power consumption for the light panel will be reduced since an opaque diffuser will not necessarily be required, or could be of much lower opacity, since the hot spots are no longer present. In addition, using the wave guide to propagate light across the light panel means that the light source does not have be as extensive. Further energy savings will be achieved as a result. It would not be obvious in the field of light panels for enclosed environments to incorporate an acrylic material since acrylic materials can produce toxic gases under certain conditions. For some applications, particularly in enclosed environments such as underground stations, platforms or train carriages, the production of toxic gases derived from the acrylic material would render the product unusable and against strict legislation.

This phenomenon is not problematic with the present light panel since the hermetically sealed capsule around the wave guide prevents any such toxic gases, as derived from the acrylic material or otherwise, from escaping and polluting the enclosed environment. By enclosed environment, we mean any enclosed public space.

A metallic base provides a durable surface for mounting the panel to fixtures and fittings within an enclosed environment.

Toughened glass should reduce the risk of damage of the panel due to impact by foreign bodies. Improving the durability of the light panel in this way reduces the risk that the hermetic seal of the capsule could be broken, in-use.

The capsule is configured to prevent fire propagation and, optionally, is configured and dimensioned to prevent surface spread of flames.

By configured and dimensioned we mean that the capsule is made from appropriate materials and is of sufficient thickness, size and shape in order to perform the function of preventing fire propagation and, optionally, preventing surface spread of flames. There are several standard tests which a skilled person could use in order to determine such materials and configuration to achieve these functions. Fire propagation prevention can be achieved by complying with BS 476: part 6. Surface spread of flame can be prevented by complying with BS 476: part 7. By preventing fire propagation and surface spread of flames, the likelihood that the wave guide would produce toxic gases in response to such scenarios is significantly reduced.

The light source may comprise an array of Light Emitting Diodes (LEDs) arranged to direct an array of light beams across the wave guide.

The array of LEDs may comprise a longitudinal group of LEDs arranged to direct a plurality of light beams longitudinally across the wave guide, and wherein the array of LEDs may comprise a transverse group of LEDs arranged to direct a plurality of light beams across the wave guide in a transverse direction to the longitudinal group.

A 2-D array of light provides more harmonious light distribution across the wave guide.

The or each group of LEDs may comprise a primary strip of LEDs and an opposing strip of LEDs arranged to direct beams of light toward one another from opposing edges of the wave guide.

The primary and opposing strips of LEDs opposing each other from opposing sides of the wave guide further improves the harmonious lighting characteristics of the panel and reduces any attenuation of the light intensity caused by the wave guide itself.

The wave guide may comprise a channel for removably and replaceably accommodating the or each strip of LEDs within the wave guide.

The or each strip of LEDs being removably and replaceably accommodated within a channel of the wave guide means that the LEDs can be easily extracted from the panel for replacement such that the other components of the panel can be reused as opposed to discarding the entire panel if only the LED strips require replacement.

The light panel may comprise a light diffusion strip positioned on a surface of the wave guide to cover the or each strip of the LEDs, wherein the light diffusion strip may include a plurality of relatively opaque regions covering the LEDs and a plurality of relatively transparent regions away from the LEDs.

The light diffusion strip having varying degrees of opacity and transparency subject to the location of the LEDs optimises the attenuation of any hot spots caused by the individual LEDs in the array. Accordingly, more light is allowed to pass at locations where the LEDs are not present. Using such a light diffusion strip reduces energy consumption of the light panel.

The wave guide may comprise a two dimensional grid of surface formations to transmit light across the panel.

The 2-dimensional grid of surface formations improves the homogeneity of light distribution across the light panel.

The surface formations may comprise a plurality of V-notches etched into a surface of the wave guide.

V-notches etched into a surface of the wave guide is a simple and easy technique in which to produce the 2-dimensional grid during manufacturing.

The screen may comprise a light diffusion layer spanning across the 2-dimensional grid.

Light in the grid has a higher intensity than elsewhere on the wave guide. The light diffusion layer spanning across the 2-dimensional grid attenuates the impact of this higher intensity light within the grid. This results in more homogenous light being emitted from the screen.

The light diffusion layer may comprise surface treatment of the screen.

The screen may be surface treated by sandblasting. Alternatively, the screen may be surface treated by surface etching. Sandblasting and surface etching are relatively easy and low cost ways to provide opacity to the screen during manufacturing.

The light diffusion layer may comprise an opal film layer.

The opal film interlayer may be made from Poly Vinyl Butyral (PVB) or Ethylene Vinyl Acetate (EVA). PVB is a resin which is strong binding, has optical clarity, can adhere to many surfaces, and is tough and flexible. EVA has similar characteristics to PVB.

The light diffusion layer may comprise a light scattering polymeric film comprising a synthetic organic polymer containing inorganic light scattering particulate.

The light scattering polymeric film may have a thickness between about 125 microns and about 500 microns.

The particulate may comprise two inorganic materials working in concert to diffuse light efficiently while allowing maximum translucency.

The particulate may comprise both glass microspheres and nano sized particles of metal oxide.

The glass microspheres may have a refractive index between about 1.59 and about 1.92.

The glass microspheres may have a particle size of between about 5 microns and about 25 microns.

The glass microspheres may comprise a ratio by weight of solids of the overall composite film of between about 10% and about 33%.

The nano sized particles of metal oxide may comprise a white metal oxide.

The white metal oxide may be selected from the list of Titanium Dioxide, Aluminium Oxide, and Zirconium Oxide.

The nano sized metal oxide particles may have a mean particle size of between about 100nm and about 300nm.

The nano sized metal oxide particles may comprise a ratio by weight of solids of the overall composite film of between about 10% and about 33%.

The combined glass microsphere and nano sized metal oxide particulate ratio by weight of solids of the overall composite film may be between about 20% and about 50%.

The light diffusion layer may comprise a polymeric binder containing saline coupling agents to create a covalent bond between the inorganic and organic materials.

The toughened glass may have thermal transmittance of between about 5 and about 6 W/m².K. Thermal transmittance in this range will help to protect against fire propagation. Typically, the toughened glass may be toughened laminated glass.

The screen may have a thickness of between about 8mm and about 12mm.

The screen having a thickness of between about 8mm and about 12mm is considered to provide sufficient strength and durability to the light panel without compromising on weight as would be the case with a screen having a thickness above about 12mm.

The intumescent sealant further improves the hermetic seal since such sealant expands when exposed to heat as opposed to degrading and cracking as may be the case for other types of sealant. This is particularly advantageous in certain scenarios such as a fire within an enclosed environment where the light panel may be used. In these scenarios, the intumescent sealant can help in extinguishing any surface flames around the capsule.

The metallic base may comprise an access port comprising a polyamide gland to allow access of the cable to the light source and maintain the hermetic seal of the capsule.

Such an access port allows for an external power source to be used for powering the light panel as opposed to relying on internal energy provisions such as a battery.

The light panel may comprise a reflective layer on a posterior surface of the wave guide.

The reflective layer of the posterior surface of the wave guide increases the intensity of light emitted from the panel. Further energy efficiencies can be attributed to the reflective layer as a result.

In one embodiment the capsule forms an outermost shell such that the panel is a single replaceable unit.

A single replaceable unit makes maintenance of the panel easier and minimises impact on a passer-by since a replacement panel can be inserted should a previous panel become faulty.

Within the scope of this application it is expressly envisaged that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible.

### BRIEF DESCRIPTION OF THE DRAWINGS

One or more embodiments of the invention will now be described, by way of example only, with reference to the accompanying drawings, in which:
Figure 1 shows an exploded perspective view of a light panel according to the present invention;
Figure 2 shows a front view of the light panel from Figure 1;
Figure 3 shows a partial section view of the light panel from Figure 1;
Figure 4 shows a similar view to Figure 3 for an alternative embodiment of a light panel according to the present invention;
Figure 5 shows a similar view to Figure 4 of an alternative embodiment of a light panel according to the present invention;
Figure 6 shows a similar view to Figure 5 of an alternative embodiment of a light panel according to the present invention;
Figure 7 shows a similar view to Figure 6 of an alternative embodiment of a light panel according to the present invention;
Figure 8 shows a similar view to Figure 7 of an alternative embodiment of a light panel according to the present invention; and
Figure 9 shows a similar view to Figure 8 of an alternative embodiment of a light panel according to the present invention.

### DETAILED DESCRIPTION

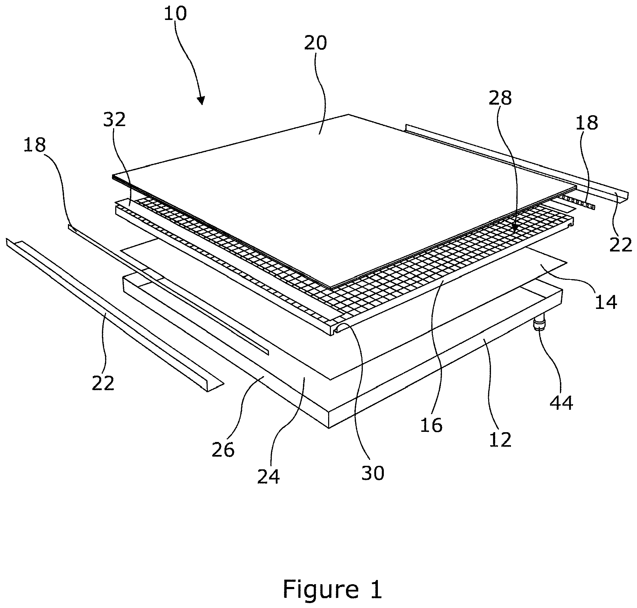

With reference to Figure 1, a first embodiment of a light panel 10 includes a metallic base 12, a reflective layer 14, a wave guide 16, a light source including LED strips 18, a screen 20, and peripheral heat sink plates 22. The light panel 10 is a fire-rated light panel, "fire-rated" being the ability of an element of construction to perform its design function during exposure to fire.

The metallic base 12 is made from stainless steel. The base 12 is in the form of an open faced box having a main panel 24 and four side walls 26 extending substantially transverse thereto. The reflective layer 14 is dimensioned to be similar in size to the side panel so as to lie within the metallic base 12.

The wave guide 16 has a similar facial surface area to the reflective layer 14. The wave guide 16 thus spans the entire light panel 10. Although the facial surface area of the wave guide 16 is consistent with the reflective layer 14, the wave guide 16 is thicker in comparison. The wave guide 16 is made from an acrylic material. The anterior surface of the wave guide 16 comprises a 2-dimensional grid of surface formations to aid light transmission across the light panel 10. The surface formations are formed as notches etched into the surface of the wave guide. The notches are V shaped channels; in the form of a plurality of substantially parallel longitudinally V shaped notched channels in addition to a plurality of substantially parallel transverse V shaped notched channels. The channels are all spaced apart by the same separation distance. The 2-dimensional grid spans the entire wave guide 16 to cover the entire anterior surface. The posteriors surface (not shown in Figure 1 due to the angle of the exploded view) is blank and does not include a 2-dimensional grid 28.

A longitudinal channel 30 is cut in to an edge of the posterior surface of the wave guide 16. The channel 30 extends the entire length of the wave guide 16. These channels 30 are for removably and replaceably accommodating each LED strip 18 within the wave guide 16. The LED strips 18 are removable and replaceable since they are attached to the channel 30 of the wave guide 16 by a silicon seal. The silicon seal can be cut away when replacement of the LED strip 16 is required. Instead, the LED strips 18 fit loosely within the channels 30.

The LED strips 18 are shown in Figure 1 as a primary strip of LEDs located at one side of the wave guide 16, and a complementary strip of LEDs 18 located at the other. The strips of LEDs 18 are located into the base 12 prior to the installation of the wave guide 16. The LED strips 18 penetrate into the channels 30. The strips of LEDs are thus arranged to direct beams of light towards one another from opposing edges of the wave guide 16. The primary and complementary strips of LEDs 18 combine to form a group of LEDs. Although not shown in Figure 1, the light panel 10 may have another group of LEDs similar to that shown in Figure 1 but oriented orthogonally with respect thereto. The light panel 10 thus has two groups of LEDs; a longitudinal group of LEDs arranged to direct the plurality of light beams longitudinally across the wave guide and a transverse group of LEDs arranged to direct a plurality of light beams across the wave guide in a direction transverse to the longitudinal group. The complete set of LEDs is defined as an array of LEDs forming a light source arranged to direct an array of light beams across the wave guide, in both longitudinal and transverse directions. Although the panel 10 has been described here as having a 2-dimensional array of LEDs, other embodiments of the panel 10 may include two LED strips 16 mounted either orthogonally or opposing one another, or may include a single LED strip located on a single side of the panel 10.

The 2-dimensional grid 28 aids in the propagation of light waves across the wave guide 16. When the LEDs are illuminated, the 2-dimensional grid 28 is presented as a grid of relatively bright light in comparison to other areas of the wave guide 16.

The light panel 10 also includes a light diffusion strip positioned along each edge of the anterior surface of the wave guide 16. These light diffusion strips 32 are positioned to cover each strip of LEDs 18. The light diffusion strip includes regions of varying opacity and transparency. In particular, the light diffusion strips 32 include a plurality of relatively opaque regions positioned to cover the LEDs. The light diffusion strips 32 also include a plurality of relatively transparent regions away from the LEDs. When illuminated, hot spots from each individual LED are attenuated by the relatively opaque regions whereas the relatively transparent regions allow a relatively high amount of light to pass. Using such light diffusion strips 32 provides for a much more desirable aesthetic effect on passers-by.

The heat sinks 22 are positioned as intermediate layers between the wave guide 16 and the base 12. The heat sinks 22 are positioned along each edge of the base 12. The heat sinks 22 serve to conduct heat away from the LEDs to the base 12. As a result, the LEDs run at a lower temperature which reduces the risk of overheating and failure.

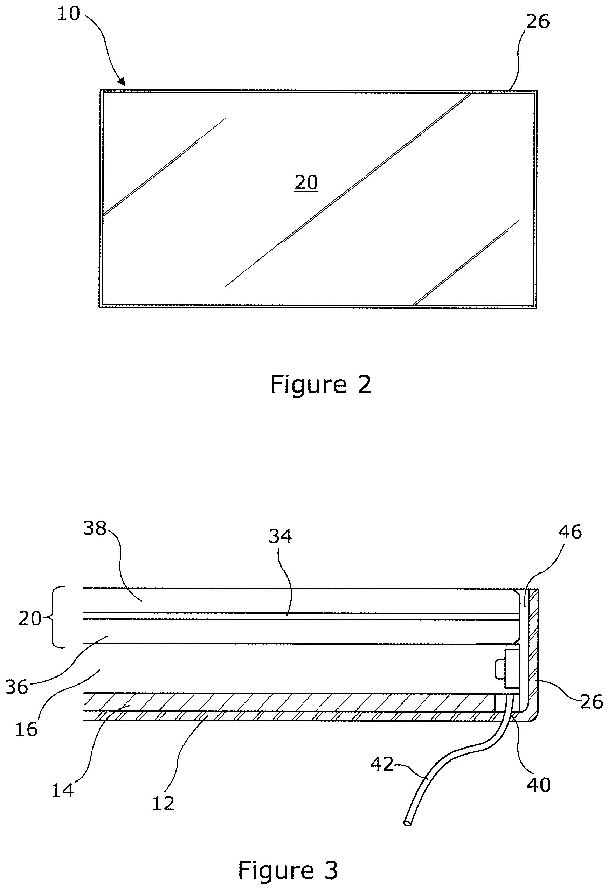

With reference to Figure 2, the screen 20 sits atop the other components of the light panel 10. From a front view, only the screen 20 and the side walls 26 of the base 12 are visible. The screen 20 is arranged to be back lit by the wave guide so as to illuminate the light panel during operation. It will be evident from viewing Figure 2 that the 2-dimensional grid from the wave guide 16 (Fig 1) is not visible. This is due to the fact that the bright light of the grid 28 (Figure 1) has been attenuated by a light diffusion layer formed as part of the screen and spanning across the grid.

With reference to Figure 3, the light diffusion layer is provided as an opal film interlayer 34 embedded within inner and outer 36, 38 sheets of toughened glass. In this way the screen is made from toughened laminated glass.

The opal film is made from Poly Vinyl Butyral (PVB). PVB is a resin which is strong binding, has optical clarity, can adhere to many surfaces, and is tough and flexible. Alternatively, Ethylene Vinyl Acetate (EVA) may be used as the opal interlayer.

The sheets of toughened glass 36, 38 are made from thermally toughened low iron, silica safety glass. In this case, silica has low iron content and is made from sand with low iron oxides which transitions to toughened/heat strengthened glass at a temperature of between about 698°C and about 704°C. The two sheets 36, 38 of glass are laminated together with the opal film 34 interlayer by heating the screen up to 109°C. The interlayer may become milky or distort if exerted to temperatures above 109°C. The curing time is approximately 27 to 29 minutes. The resulting screen has a thermal transmittance of 5.5 W/m².K. Such a thermal transmittance is considered to be sufficient to prevent surface spread of flames and to prevent fire propagation. However, in practice a thermal transmittance of anywhere between 5 and 6 W/m².K will likely prevent surface spread of flames and to prevent fire propagation of the screen.

Energy properties associated with the glass include a 72% Solar Factor, 10% Energy Reflection, 66% Direct Energy Transmission, 24% Energy Absorption, a Shading Coefficient of 0.83, and 0% UV-transmission. Light properties of the glass include 65% Light Transmission, 12% Light Reflection, 12% Internal Light Reflection, and a Colour Rendering Index - RD65 of 99%. Other properties associated with the glass include Direct Airborne Sound Insulation of 35dB and a weight per unit area of 22.5 kg/m².

The screen 20, including the sheets of laminated glass 36, 38 and the opal film 34 and has a thickness of between 8mm and 12mm.

The base 12 includes an access port 40 for allowing a power cable 42 to pass from an exterior power source to the LED strips 18. With further reference to Figure 1, the access port comprises a polyamide gland 44 to allow the cable to pass through to the light source whilst maintaining a hermetic seal with the base 12.

With further reference to Figure 3, an intumescent sealant 46 is applied all around the interior surfaces of the side walls 26. The sealant 46 secures each of the components of the panel 10 to the base 12. The sealant 46 is of sufficient strength so as to hermetically seal the wave guide 16 and other components of the panel 10 from an exterior environment. In this way, the screen 20 and the base 12 form a capsule encasing the wave guide 16, the LED strips, the reflective layer 14, the light diffusion strips 32, and the heat sinks 22 within the hermetically sealed capsule.

Since the acrylic wave guide 16 is hermetically sealed from the exterior environment of the panel 10, toxic gas will not release from the panel in various environmental scenarios such as a fire. Therefore, this light panel 10 can be used in enclosed environments such as underground train stations and platforms. In accordance with smoke emissions test BS 6853: 1999: Annex D.8.4, the toxicity levels associated with the light panel 10 under test conditions are no greater than Ao (ON) 2.4 and Ao (OFF) 3.6. These limits are the upper limits for compliance with London Underground criteria LUL 1-085, making the light panel 10 suitable for use in both underground station and tunnel environments, for example, and for use within train carriages. Typically, the light panel 10 may have values of approximately Ao (ON) 1.07 and approximately Ao (OFF) 1.34, with a standard deviation of 0.734 and 1.03 respectively.

The light panel 10 is also certified for standard BS 476: part 7 (regarding spread of flame) and BS 476: part 6 (regarding fire propagation) to ensure it is suitable for use in the aforementioned enclosed environments.

Other advantages of this light panel 10 include the fact that low energy consumption is required since the light source is composed of LED strips 18 located around the edge of the acrylic wave guide 16 which then transmits the light across the light panel to back light the screen 20. Such an arrangement requires less power than back lighting the screen 20 directly by means of a 2-D array of LEDs or other like source. In addition, the panel 10 is replaceable as a standalone single replaceable unit since the capsule forms an outer shell housing all of the other components of the panel inside.

In addition to preventing toxic gases from escaping from the panel 10, due to the materials from which the panel is made and the corresponding dimensions, in particular the base 12 and the screen 20, the capsule is configured and dimensioned to prevent fire propagation and prevent surface spread of flames. Specifically, the base 12 is made from stainless steel and has a thickness of 1.5mm. The screen 20 is made from toughened laminated glass and has a thickness of between 8mm and 12mm. More particularly, the screen 20 has an inner sheet of glass 36 being 4mm thick, and outer layer of toughened laminated glass 38 being 4mm thick and the opal film 34 being 1mm thick. The dimensions and materials of the capsule can be changed provided that it remains sufficient to prevent fire propagation and prevent surface spread of flames.

Prevention of fire propagation can be achieved by compliance with a number of standard tests, for instance BS 476: part 6. This test renders a specimen as being able to prevent fire propagation when a specimen has been exposed to specific test conditions and has sub-indices S1, S2, and S3 each less than 6 and a total index S being less than 12. The aforementioned dimensions and materials for the capsule of the light panel are sufficient to prevent fire propagation as can be seen in the results in table 1 below.

**Table 1**

| Time | Specimen | Calibration | Ts/Tc/10t | Sub Index of Performance |
|---|---|---|---|---|
| mins | Temperature | Temperature | | |
| t | Deg C | Deg C | | |
| | Ts | Tc | | |
| 0.50 | 11 | 11 | 0.00 | 0.00 |
| 1.00 | 15 | 16 | 0.00 | |
| 1.50 | 19 | 21 | 0.00 | |
| 2.00 | 22 | 25 | 0.00 | |
| 2.50 | 24 | 29 | 0.00 | |
| 3.00 | 28 | 33 | 0.00 | |
| 4.00 | 53 | 65 | 0.00 | 0.00 |
| 5.00 | 83 | 102 | 0.00 | |
| 6.00 | 105 | 128 | 0.00 | |
| 7.00 | 126 | 149 | 0.00 | |
| 8.00 | 145 | 169 | 0.00 | |
| 9.00 | 165 | 182 | 0.00 | |
| 10.00 | 185 | 193 | 0.00 | |
| 12.00 | 241 | 210 | 0.26 | 2.77 |
| 14.00 | 342 | 221 | 0.86 | |
| 16.00 | 358 | 232 | 0.79 | |
| 18.00 | 329 | 238 | 0.51 | |
| 20.00 | 314 | 344 | 0.35 | |
| | Total Index of Performance S = 2.77 | | | |

Similarly, the dimensions and materials of the capsule can be modified providing that the test for the surface spread of flames, BS 476: part 7, is complied with. This test involves subjecting the specimen to a specific temperature and measuring the distance a flame travels across a surface over a period of time. Depending on the distance of spread of the flame at 1.5 minutes, the specimen is assigned to a classification. The most stringent classification involves a distance of spread being less than 165mm. The aforementioned dimensions and materials of the capsule of the light panel 10 result in compliance with this most stringent classification since the flame on the surface spreads less than 50mm during the 1½ minute time period.

The performance of the light panel 10 in the tests for BS 476: part 6, and BS 476: part 7, qualify the light panel 10 for Class 0 fire certification. Class 0 certification is the highest rating for fire propagation and surface spread of flames performance for wall lining materials. Typically, the light panel 10 may have: a fire propagation index, I, of 2.5; a subindex, i₁, of 0.0; a subindex, i₂ of 0.2; and, a subindex, i₃, of 2.3.

Various alternative embodiments exist without departing from the scope of the claims. Features of these alternative embodiments which are in common with the first embodiment need not be repeated and are each labelled 100 greater. Various features only described with reference to one particular embodiment may be incorporated onto other embodiments since the aforementioned embodiments serve for illustrative purposes only.

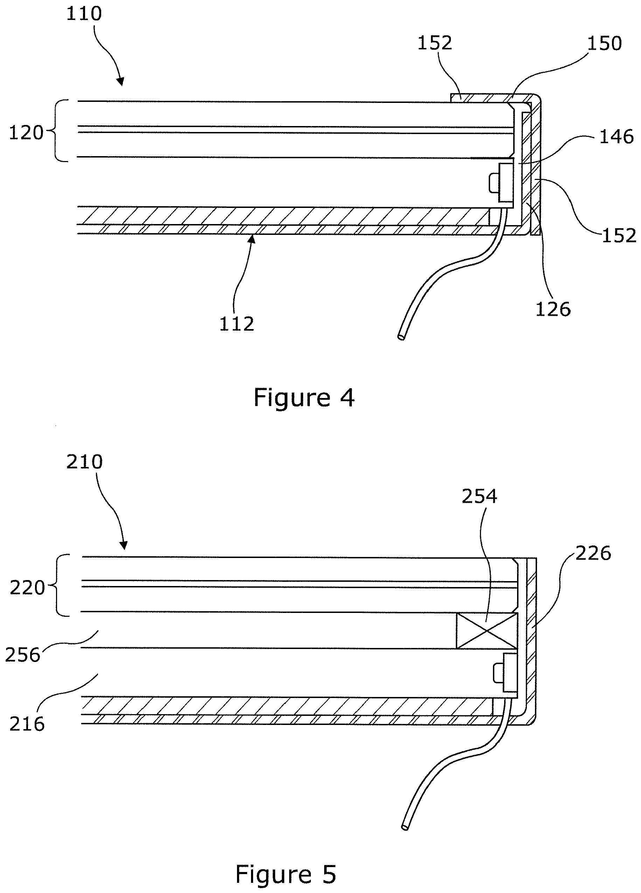

With reference to Figure 4, an alternative embodiment of the light panel 110 is shown. Broadly speaking, the light panel 110 has the same construction to light panel 10. In addition, light panel 110 has a peripheral metal capping frame 150 the capping frame 150 is shown in Figure 4 on one side of the panel 110. However in practice, the capping frame 150 is peripheral and is located on all sides masking the intumescent sealant 146. The capping frame has an L-shaped section formed from two perpendicular legs 152. One leg 152 is connected to the side wall 126. The other leg 152 abuts the screen 120; however no physical connection is required between the two. The capping frame 150 serves to increase the structural integrity of the panel 110 and also further increases the hermetic seal between the screen 120 and the frame 112.

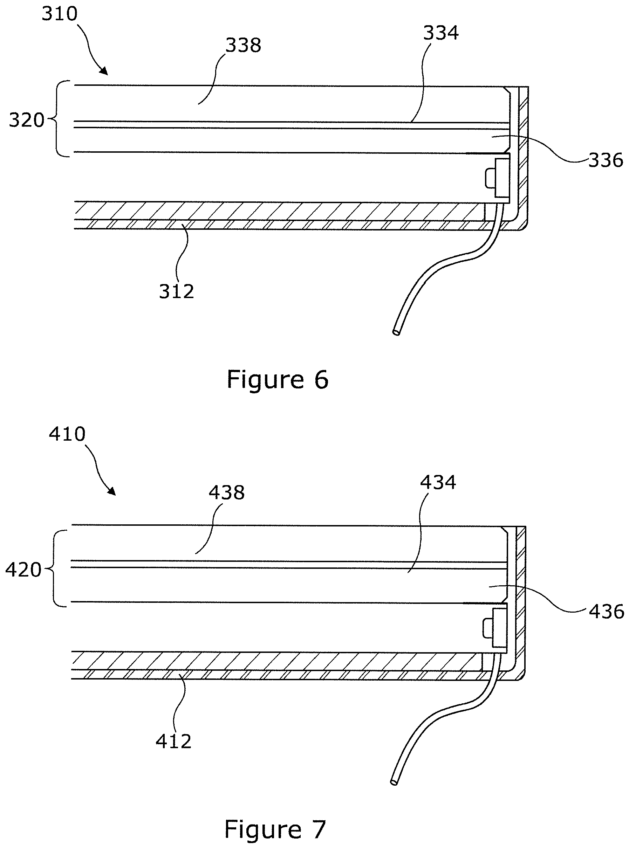

With reference to Figure 5, an alternative embodiment of the light panel 210 has the same structural features of the first embodiment with the addition of a spacer 254 positioned intermediate the screen 120 and the wave guide 216 to create an intermediate void 256. The spacer 254 is a cement fibre board spacer. The width of the spacer 254 is 10mm and exists on all sides of the panel 210. The spacer 254 is located at the edge near the side walls 226. The height of the spacer 254 is 6mm in order to create a 6mm void 256 between the screen 220 and the wave guide 216. The void 216 serves to trap any toxic gases between the screen 220 and the acrylic wave guide 216 to minimise the risk of the acrylic wave guide 216 becoming releasing toxic gases to the enclosed environment in the event of a fire.
With reference to Figure 6, another embodiment of the panel 310 is similar in construction to the first embodiment with modified dimensions of the components. The screen 320 of panel 310 has a thickness of 11mm. The opal film remains at 1mm thickness. In addition, the inner sheet of toughened laminated glass 336 remains at 4mm. However, the outer sheet of toughened laminated glass 338 has increased thickness to 6mm to improve the impact resistance and resulting structural integrity of the panel 310. In addition, the stainless steel frame 312 has an increased thickness to 2mm. The light diffusion strip 32 has been removed in this embodiment.

With reference to Figure 7, a further embodiment of the light panel 410 has the same structural features as the first embodiment with modified dimensions. The steel frame 412 has a thickness of 1.5mm. The screen 420 has a total thickness of 13mm. Again, the opal film layer 434 has a thickness of 1mm. Both the inner and outer sheets of toughened laminated glass 436, 438 have a thickness of 6mm each.

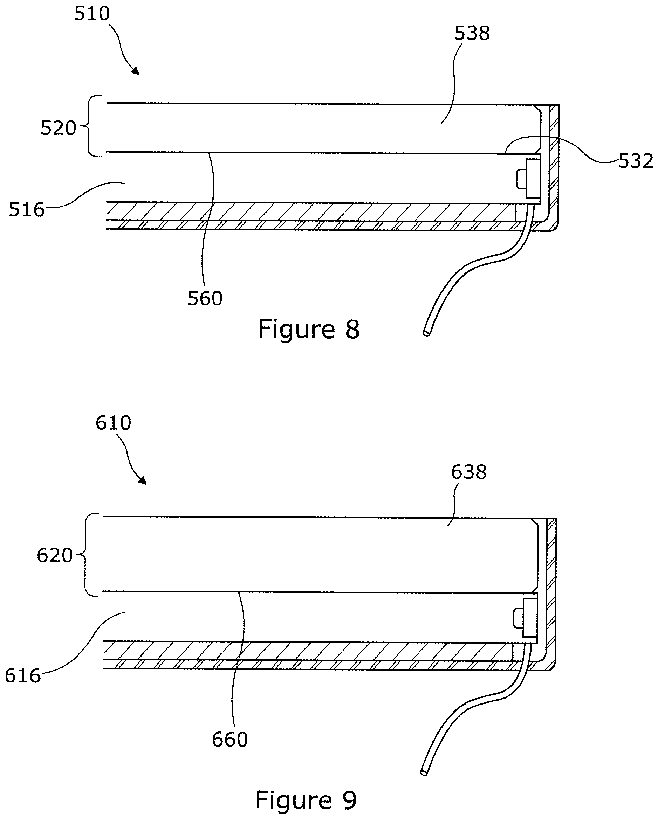

With reference to Figure 8, a further embodiment of the light panel 510 has the same structural features as the first embodiment but with a modified screen 520. The screen 520 includes a single sheet of toughened laminated glass 538. The thickness of the screen 520, and accordingly the single sheet of glass 538, is 8mm. The opal film 34 has been removed. Although this embodiment does not include the opal film 34 (Fig 1) the light diffusion strip 532 is present intermediate the screen 520 and the wave guide 516. As an alternative to the PVB opal film, a light diffusion layer is provided directly on the inner or outer 536, 538 glass sheets by surface treatment. The surface can be treated in various ways including sand blasting or surface etching. However, this embodiment lends itself particularly well to the inclusion of a light diffusion layer comprising a light scattering polymeric film 560 to replace the opal film interlayer 34.

This film 560 has a thickness of between 125 and 500 microns. The film 560 comprises a synthetic organic polymer containing inorganic light scattering particulate. The particulate includes two inorganic materials working in constant to diffuse light efficiency while allowing maximum translucency. The particulate comprises both glass microspheres and nano sized particles of metal oxide. The glass microspheres have a refractive index of between 1.59 and 1.92. The glass microspheres have a particle size of between 5 and 25 microns. In addition, the glass microspheres comprise a ratio by weight of solids of the overall composite film of between 10% and 33%. The nano sized particles of metal oxide comprise a white metal oxide which can be any of titanium dioxide, aluminium dioxide and zinconion oxide. Other white metal oxides can also be used however these three are considered to be most appropriate. The nano sized metal oxide particles have a mean particle size of between about 100 nano metres and about 300 nano metres. The nano sized metal oxide particles comprise a ratio by weight of solids of the overall composite film of between 10% and 33%. The combined glass microsphere and nano sized metal oxide particulate ratio by weight of solids of the overall composite film is between 20% and 50%. In addition, the light diffusion layer comprises a polymeric binder containing saline coupling agents to create a covalent bond between the inorganic and organic materials.

With reference to Figure 9, an alternative embodiment of the light panel 610 has the same structural features as the previous embodiment of the light panel 510. The screen 620 again includes a single sheet of toughened laminated glass 638. The thickness of the screen 620 and thus the laminated glass 638 is 12mm. The light diffusion film 660 is positioned intermediate the screen 620 and the acrylic wave guide 616. The increased thickness of the laminated glass 638 improves impact resistance of the light panel 610 to prevent damage in use. Such impact resistance minimises the risk of the hermetic seal of the capsule being broken.

It will be appreciated that the light panel described herein may take any one of a number of forms, providing that the test for the surface spread of flames, BS 476: part 7, is complied with, along with BS 476: part 6, for fire propagation, and BS 6853: 1999: Annex D.8.4 for smoke emissions. The light panel may therefore be dimensioned and shaped as appropriate for the intended application of the light panel. The light panel may be configured to be used in a number of environments and as part of a number of products, including, but not being limited to: a display screen; lift interior lighting; a poster frame; foot treads; walkways; wall and/or ceiling lighting panels; and escalator-based light panels.

## Claims

1. A fire-rated light panel (10) for use in an enclosed environment, the panel comprising;
a light source (18);
a wave guide (16) in visible communication with the light source (18) to propagate light across the light panel (10), the wave guide (16) being made from an acrylic material; and
a capsule encasing the light source (18) and the wave guide (16), the capsule being configured to prevent fire propagation,
wherein the capsule has a metallic base (12), a screen (20) arranged to be backlit by the wave guide (16) in-use, and an intumescent sealant to connect the screen (20) and the wave guide (16) to the metallic base (12), the screen (20) comprising toughened glass,
and wherein the capsule is hermetically sealed around the wave guide (16) to prevent the release of toxic gases derived from the acrylic material from the light panel (10).

2. The light panel (10) of Claim 1 wherein the light source comprises an array of Light Emitting Diodes (LEDs) (18) arranged to direct an array of light beams across the wave guide (16), the array of LEDs (18) comprising a longitudinal group of LEDs arranged to direct a plurality of light beams longitudinally across the wave guide (16), and wherein the array of LEDs (18) comprises a transverse group of LEDs arranged to direct a plurality of light beams across the wave guide in a transverse direction to the longitudinal group.

3. The light panel (10) of Claim 2 wherein the or each group of LEDs (18) comprises a primary strip of LEDs and an opposing strip of LEDs arranged to direct beams of light toward one another from opposing edges of the wave guide (16).

4. The light panel (10) of Claim 3 wherein the wave guide comprises a channel (30) for removably and replaceably accommodating the or each strip of LEDs (18) within the wave guide (16).

5. The light panel (10) of any preceding claim wherein the wave guide (16) comprises a 2-dimensional grid of surface formations to transmit light across the panel (10), and wherein the surface formations optionally comprise a plurality of V-notches etched into a surface of the wave guide (16).

6. The light panel (10) of Claim 5 wherein the screen (20) comprises a light diffusion layer spanning across the two dimension grid, the light diffusion layer optionally comprising surface treatment of the screen.

7. The light panel (10) of Claim 5 wherein the screen (20) comprises a light diffusion layer spanning across the two dimension grid, the light diffusion layer comprising an opal film layer.

8. The light panel (10) of Claim 5 wherein the screen (20) comprises a light diffusion layer spanning across the two dimension grid, the light diffusion layer comprising a light scattering polymeric film (560) comprising a synthetic organic polymer containing inorganic light scattering particulate.

9. The light panel (10) of Claim 8 wherein the particulate comprises two inorganic materials working in concert to diffuse light efficiently while allowing maximum translucency, and wherein the particulate optionally comprises both glass microspheres and nano sized particles of metal oxide.

10. The light panel (10) of Claim 9 wherein the glass microspheres comprise one or more of the following:
(i) a refractive index between about 1.59 and about 1.92;
(ii) a particle size of between about 5 microns and about 25 microns; and
(iii) a ratio by weight of solids of the overall composite film of between about 10% and about 33%.

11. The light panel (10) of Claim 9 or Claim 10 wherein the nano sized particles of metal oxide comprise one or more of the following:
(i) a white metal oxide, selected from the list of Titanium Dioxide, Aluminium Oxide, and Zirconium Oxide;
(ii) a mean particle size of between about 100nm and about 300nm; and
(iii) a ratio by weight of solids of the overall composite film of between about 10% and about 33%.

12. The light panel (10) of any preceding claim wherein the toughened glass (638) has a thermal transmittance of between about 5 and about 6 W/m².K.

13. The light panel (10) of any preceding claim wherein the toughened glass (638) is toughened laminated glass.

14. The light panel (10) of any preceding claim wherein the screen (20) has a thickness of between about 8mm and about 12mm.

## Patentansprüche

1. Brandschutz-Lichtpanel (10) zur Verwendung in einer geschlossenen Umgebung, wobei das Panel Folgendes umfasst:
eine Lichtquelle (18);
einen Wellenleiter (16) in sichtbarer Verbindung mit der Lichtquelle (18), um Licht über das Lichtpanel (10) auszubreiten, wobei der Wellenleiter (16) aus einem Acrylmaterial hergestellt ist; und
eine Kapsel, die die Lichtquelle (18) und den Wellenleiter (16) umgibt, wobei die Kapsel so konfiguriert ist, dass sie die Ausbreitung von Feuer verhindert,
wobei die Kapsel Folgendes aufweist: eine metallische Basis (12), einen Schirm (20), der angeordnet ist, um von dem Wellenleiter (16) im Gebrauch hinterleuchtet zu werden, und ein intumeszierendes Dichtungsmittel, um den Schirm (20) und den Wellenleiter (16) mit der metallischen Basis (12) zu verbinden, wobei der Schirm (20) gehärtetes Glas umfasst,
und wobei die Kapsel hermetisch um den Wellenleiter (16) herum versiegelt ist, um die Freisetzung von toxischen Gasen, die aus dem Acrylmaterial des Lichtpanels (10) stammen, zu verhindern.

2. Lichtpanel (10) nach Anspruch 1, wobei die Lichtquelle eine Anordnung von Leuchtdioden (LED) (18) umfasst, die angeordnet ist, um eine Anordnung von Lichtstrahlen über den Wellenleiter (16) zu lenken, wobei die Anordnung von LEDs (18) eine Längsgruppe von LEDs umfasst, die angeordnet sind, mehrere Lichtstrahlen in Längsrichtung über den Wellenleiter (16) zu lenken, und wobei die Anordnung von LEDs (18) eine Quergruppe von LEDs umfasst, die angeordnet ist, mehrere Lichtstrahlen quer zur Längsgruppe über den Wellenleiter zu lenken.

3. Lichtpanel (10) nach Anspruch 2, wobei die oder jede Gruppe von LEDs (18) einen Hauptstreifen von LEDs und einen gegenüberliegenden Streifen von LEDs umfasst, die angeordnet sind, Lichtstrahlen von gegenüberliegenden Kanten des Wellenleiters (16) aufeinanderzurichten.

4. Lichtpanel (10) nach Anspruch 3, wobei der Wellenleiter einen Kanal (30) zum entfernbaren und ersetzbaren Aufnehmen des oder jedes Streifens von LEDs (18) in dem Wellenleiter (16) umfasst.

5. Lichtpanel (10) nach einem der vorhergehenden Ansprüche, wobei der Wellenleiter (16) ein zweidimensionales Gitter von Oberflächenformationen umfasst, um Licht über das Panel (10) zu übertragen, und wobei die Oberflächenformationen optional mehrere in eine Oberfläche des Wellenleiters (16) eingeätzte V-Kerben umfassen.

6. Lichtpanel (10) nach Anspruch 5, wobei der Schirm (20) eine Lichtstreuschicht umfasst, die das zweidimensionale Gitter überspannt, wobei die Lichtstreuschicht optional eine Oberflächenbehandlung des Schirms umfasst.

7. Lichtpanel (10) nach Anspruch 5, wobei der Schirm (20) eine Lichtstreuschicht umfasst, die sich über das zweidimensionale Gitter erstreckt, wobei die Lichtstreuschicht eine Opalfilmschicht umfasst.

8. Lichtpanel (10) nach Anspruch 5, wobei der Schirm (20) eine Lichtstreuschicht umfasst, die sich über das zweidimensionale Gitter erstreckt, wobei die Lichtstreuschicht einen lichtstreuenden Polymerfilm (560) umfasst, der ein synthetisches organisches Polymer mit anorganischen lichtstreuenden Partikeln enthält.

9. Lichtpanel (10) nach Anspruch 8, wobei die Partikel zwei anorganische Materialien umfassen, die zusammenarbeiten, um Licht effizient zu diffundieren, während maximale Lichtdurchlässigkeit ermöglicht wird, und wobei die Partikel gegebenenfalls sowohl Glasmikrokugeln als auch Metalloxidpartikel in Nanogröße umfassen.

10. Lichtpanel (10) nach Anspruch 9, wobei die Glasmikrokugeln eines oder mehrere der Folgenden umfassen:
(i) einen Brechungsindex zwischen etwa 1,59 und etwa 1,92;
(ii) eine Partikelgröße zwischen etwa 5 Mikrometern und etwa 25 Mikrometern; und
(iii) ein Gewichtsverhältnis der Feststoffe des gesamten Verbundfilms zwischen etwa 10 % und etwa 33 %.

11. Lichtpanel (10) nach Anspruch 9 oder 10, wobei die Metalloxidpartikel in Nanogröße eines oder mehrere der Folgenden umfassen:
(i) ein weißes Metalloxid, ausgewählt aus Titandioxid, Aluminiumoxid und Zirkoniumoxid;
(ii) eine mittlere Partikelgröße zwischen etwa 100 nm und etwa 300 nm; und
(iii) ein Gewichtsverhältnis der Feststoffe des gesamten Verbundfilms zwischen etwa 10 % und etwa 33 %.

12. Lichtpanel (10) nach einem der vorhergehenden Ansprüche, wobei das gehärtete Glas (638) einen Wärmedurchgangskoeffizienten von zwischen etwa 5 und etwa 6 W/m²·K aufweist.

13. Lichtpanel (10) nach einem der vorhergehenden Ansprüche, bei der das gehärtete Glas (638) gehärtetes Verbundglas ist.

14. Lichtpanel (10) nach einem der vorhergehenden Ansprüche, wobei der Schirm (20) eine Dicke von zwischen etwa 8 mm und etwa 12 mm aufweist.

## Revendications

1. Panneau lumineux résistant au feu (10) destiné à être utilisé dans un environnement clos, le panneau comprenant ;
une source de lumière (18) ;
un guide d'onde (16) en communication visible avec la source de lumière (18) pour propager la lumière à travers le panneau de lumière (10), le guide d'onde (16) étant constitué d'un matériau acrylique ; et
une capsule contenant la source de lumière (18) et le guide d'onde (16), la capsule étant configurée pour empêcher la propagation du feu,
dans lequel la capsule a une base métallique (12), un écran (20) agencé pour être rétro-éclairé par le guide d'onde (16) utilisé, et un agent d'étanchéité intumescent pour connecter l'écran (20) et le guide d'onde (16) à la base métallique (12), l'écran (20) comprenant du verre trempé,
et dans lequel la capsule est scellée hermétiquement autour du guide d'onde (16) pour empêcher la libération de gaz toxiques dérivés du matériau acrylique du panneau lumineux (10).

2. Panneau lumineux (10) selon la revendication 1, dans lequel la source de lumière comprend des diodes électroluminescentes (DEL) (18) agencées pour diriger des faisceaux lumineux à travers le guide d'onde (16), le faisceau de DEL (18) comprenant un groupe longitudinal de DEL conçues pour diriger une pluralité de faisceaux lumineux longitudinalement sur le guide d'onde (16), et dans lequel le faisceau de DEL (18) comprend un groupe de DEL transversales disposées pour diriger une pluralité de faisceaux lumineux à travers le guide d'onde dans une direction transversale au groupe longitudinal.

3. Panneau lumineux (10) selon la revendication 2, dans lequel le ou chaque groupe de DEL (18) comprend une bande principale de DEL et une bande opposée de DEL disposées de manière à diriger des faisceaux de lumière l'un vers l'autre à partir des bords opposés du guide d'onde (16).

4. Panneau lumineux (10) selon la revendication 3, dans lequel le guide d'onde comprend un canal (30) pour recevoir de manière amovible et remplaçable la ou chaque bande de DEL (18) à l'intérieur du guide d'onde (16).

5. Panneau lumineux (10) selon l'une quelconque des revendications précédentes, dans lequel le guide d'onde (16) comprend une grille bidimensionnelle de formations de surface pour transmettre la lumière à travers le panneau (10), et dans lequel les formations de surface comprennent éventuellement une pluralité d'encoches en V gravées dans une surface du guide d'onde (16).

6. Panneau lumineux (10) selon la revendication 5, dans lequel l'écran (20) comprend une couche de diffusion de lumière s'étendant sur la grille à deux dimensions, la couche de diffusion de lumière comprenant éventuellement un traitement de surface de l'écran.

7. Panneau lumineux (10) selon la revendication 5, dans lequel l'écran (20) comprend une couche de diffusion de lumière s'étendant sur la grille à deux dimensions, la couche de diffusion de lumière comprenant une couche de film opale.

8. Panneau lumineux (10) selon la revendication 5, dans lequel l'écran (20) comprend une couche de diffusion de lumière s'étendant sur la grille à deux dimensions, la couche de diffusion de lumière comprenant un film polymère diffusant la lumière (560) comprenant un polymère organique synthétique contenant des substances des particules inorganiques diffusant la lumière.

9. Panneau lumineux (10) selon la revendication 8, dans lequel le matériau particulaire comprend deux matériaux inorganiques agissant de concert pour diffuser efficacement la lumière tout en permettant une transparence maximale, et dans lequel le matériau particulaire comprend éventuellement à la fois des microsphères de verre et des particules d'oxyde métallique de taille nanométrique.

10. Panneau lumineux (10) selon la revendication 9, dans lequel les microsphères de verre comprennent un ou plusieurs des éléments suivants :
(i) un indice de réfraction compris entre environ 1,59 et environ 1,92 ;
(ii) une taille de particule comprise entre environ 5 microns et environ 25 microns ; et
(iii) un rapport en poids de matières solides de l'ensemble du film composite compris entre environ 10 % et environ 33 %.

11. Panneau lumineux (10) selon la revendication 9 ou 10, dans lequel les nanoparticules d'oxyde métallique comprennent un ou plusieurs des éléments suivants :
(i) un oxyde de métal blanc, choisi parmi la liste de dioxyde de titane, oxyde d'aluminium et oxyde de zirconium ;
(ii) une taille de particule moyenne comprise entre environ 100 nm et environ 300 nm ; et
(iii) un rapport en poids de matières solides de l'ensemble du film composite compris entre environ 10 % et environ 33 %.

12. Panneau lumineux (10) selon l'une quelconque des revendications précédentes, dans lequel le verre trempé (638) a un facteur de transmission thermique compris entre environ 5 et environ 6 W/m².K.

13. Panneau lumineux (10) selon l'une quelconque des revendications précédentes, dans lequel le verre trempé (638) est un verre feuilleté trempé.

14. Panneau lumineux (10) selon l'une quelconque des revendications précédentes, dans lequel l'écran (20) a une épaisseur comprise entre environ 8 mm et environ 12 mm.
